(19) Europäisches Patentamt
European Patent Office
Office européen des brevets

(11) **EP 3 985 579 A1**

(12) **EUROPEAN PATENT APPLICATION**

(43) Date of publication:
**20.04.2022 Bulletin 2022/16**

(21) Application number: **20201703.4**

(22) Date of filing: **14.10.2020**

(51) International Patent Classification (IPC):
**G06Q 10/04** (2012.01)    **G06Q 10/06** (2012.01)
**G06N 3/08** (2006.01)    **G08G 1/00** (2006.01)
**G01C 21/34** (2006.01)

(52) Cooperative Patent Classification (CPC):
**G06Q 10/047; G06N 3/088; G06Q 10/0631; G08G 1/202**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft**
**80809 München (DE)**

(72) Inventors:
• **Syed, Arslan Ali**
  **80937 München (DE)**
• **Bachet, Abd Elrahman**
  **80797 München (DE)**

(54) **REGIONAL BATCHING TECHNIQUE WITH REINFORCEMENT LEARNING BASED DECISION CONTROLLER FOR SHARED AUTONOMOUS MOBILITY FLEET**

(57) The present disclosure provides a system for operating a fleet of vehicles, comprising: a receiving unit configured to receive a plurality of user requests for transportation of users to respective destinations; a batching decisions controller unit configured to batch the plurality of user requests based on at least one of an origin and a destination of each user to form at least one request batch; and an assignment unit configured to apply an algorithm to the at least one request batch to assign each of the user requests of the at least one request batch to a respective vehicle of the fleet of vehicles.

Fig. 1

## Description

### FIELD

Embodiments of the present disclosure relate to a system and method for operating a fleet of vehicles. Embodiment of the present disclosure particularly relate to an efficient assignment of user requests to a vehicle.

### BACKGROUND

With the rise of smartphones' usage, and the need to share the underutilized resources, Mobility on Demand (MOD) applications such as Ride Hailing (RH) and Ride Sharing (RS) services have emerged and their market has been growing fast in the recent years all over the world. In RH services, the user requests a vehicle for a trip from a pickup location to a dropoff location. Each vehicle is allowed to serve only a single user request at a time. In contrast, in an RS service, a single vehicle can combine multiple user requests into a single trip. For both RH and RS, Mobility Service Providers (MSP) have to assign the incoming user requests to suitable vehicles dynamically. This dynamic assignment plays a significant role in the vehicle routing and thus efficiency.

Further, intra-city MOD services such as RH and RS are also characterized by the requirement of quick responses to users. The new users arrive dynamically to the system who need to be served within certain time windows. Contrarily, in some applications like packages delivery or inter-city RS, the planning time horizon is quite long which reduces the overall complexity of the vehicle routing.

In view of the above, new systems and methods for operating a fleet of vehicles, that overcome at least some of the problems in the art are beneficial.

### SUMMARY

In light of the above, a system and method for operating a fleet of vehicles are provided. It is an object of the present disclosure to provide a more efficient assignment of user requests to vehicles. Thereby, processing times and the use of processing resources can be reduced. Further, an efficient vehicle utilization and vehicle routing can be provided, thereby reducing vehicle emissions, such as carbon dioxide emission.

Further aspects, benefits, and features of the present disclosure are apparent from the claims, the description, and the accompanying drawings.

According to an independent aspect of the present disclosure, a system for operating a fleet of vehicles is provided. The system includes a receiving unit configured to receive a plurality of user requests for transportation of users to respective destinations; a batching decisions controller unit configured to batch the plurality of user requests based on at least one of an origin and a destination of each user to form at least one request batch; and an assignment unit configured to apply an algorithm to at least one request batch to assign each of the user requests of the at least one request batch to a respective vehicle of the fleet of vehicles.

Preferably, the receiving unit, the batching decisions controller unit and the assignment unit are included in a server having one or more processors configured to implement the aspects of the system. For example, the server can be a server of a Mobility Service Provider.

The term vehicle includes passenger cars, trucks, buses, mobile homes, motorcycles, etc., which serve to transport people, goods, etc. In particular, the term includes motor vehicles for the transport of persons.

Preferably, the vehicles are autonomous vehicles, such as autonomous taxis. Autonomous vehicles can be configured for driverless driving, where the vehicle can automatically handle all situations like a human driver during the entire journey; a driver is generally no longer required.

Preferably, the batching decisions controller unit is configured to include a user request in the at least one request batch and to delay an inclusion of a user request in the at least one request batch based on at least one of the origin and the destination of the corresponding user.

Preferably, each request batch corresponds to a respective batching period, and wherein the batching decisions controller unit is configured to vary the duration of the batching period.

Preferably, the batching decisions controller unit is configured to extend a basic duration of the batching period by delaying an inclusion of a user request in the at least one request batch.

Preferably, the batching decisions controller unit is configured to extend the batching period up to a maximum duration, in particular wherein the basic duration is 10 seconds and/or the maximum duration is 30 seconds.

Preferably, the batching decisions controller unit includes a Reinforcement Learning-trained neural network configured for batching the plurality of user requests.

Preferably, the system is further configured to determine, for each of the assigned vehicles, a respective travel path.

Preferably, the system is further configured to navigate and/or control the vehicles according to the determined travel paths. For example, the system can provide instructions to an autonomous vehicle to transport the user from the origin to the destination.

According to another independent aspect of the present disclosure, a method for operating a fleet of vehicles is provided. The method includes receiving a plurality of user requests for transportation of users to respective destinations; batching, by a batching decisions controller unit, the plurality of user requests based on at least one of an origin and a destination of each user to form at least one request batch; and applying an algorithm to the at least one request batch to assign each of the user requests of the at least one request batch to a respective vehicle of the fleet of vehicles.

Embodiments are also directed at systems for carrying out the disclosed methods and include system aspects for performing each described method aspect. These method aspects may be performed by way of hardware components, a computer programmed by appropriate software, by any combination of the two or in any other manner. Furthermore, embodiments according to the invention are also directed at methods for operating the described system. It includes method aspects for carrying out every function of the system.

According to a further aspect of the present disclosure, a machine-readable medium is provided. The machine-readable medium includes instructions executable by one or more processors to implement the method of the embodiments of the present disclosure.

The (e.g. non-transitory) machine readable medium may include, for example, optical media such as CD-ROMs and digital video disks (DVDs), and semiconductor memory devices such as Electrically Programmable Read-Only Memory (EPROM), and Electrically Erasable Programmable Read-Only Memory (EEPROM). The machine-readable medium may be used to tangibly retain computer program instructions or code organized into one or more modules and written in any desired computer programming language. When executed by, for example, one or more processors such computer program code may implement one or more of the methods described herein.

According to an independent aspect of the present disclosure, a system for operating a fleet of vehicles is provided. The system includes one or more processors; and a memory (e.g. the above machine-readable medium) coupled to the one or more processors and comprising instructions executable by the one or more processors to implement the method of the embodiments of the present disclosure.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1                shows a system for operating a fleet of vehicles according to embodiments described herein;

FIGs. 2A and B     show examples of the constant and region-based batching strategies;

FIG. 3A               shows the Dueling DQN architecture used to decouple the Q-values estimations into a state value and action advantages;

FIG. 3B               shows the Branching Dueling Q-Network which is used to adapt the dueling architecture for the Q-values estimations for problems with high-dimensional action spaces; and

FIG. 4                shows an exemplary Ride Hailing simulation environment.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

## 1. Gist of the Invention

The present disclosure provides a batching technique which considers origin and destination information of new users, whereby the batch profit and ultimately the overall profit of the MOD service can be improved. In particular, the solution proposed by the present disclosure can reduce processing times and the use of processing resources in the assignment of users to vehicles. Further, an efficient vehicle utilization and vehicle routing can be provided due to the improved assignment process, thereby reducing vehicle emissions, such as carbon dioxide emission.

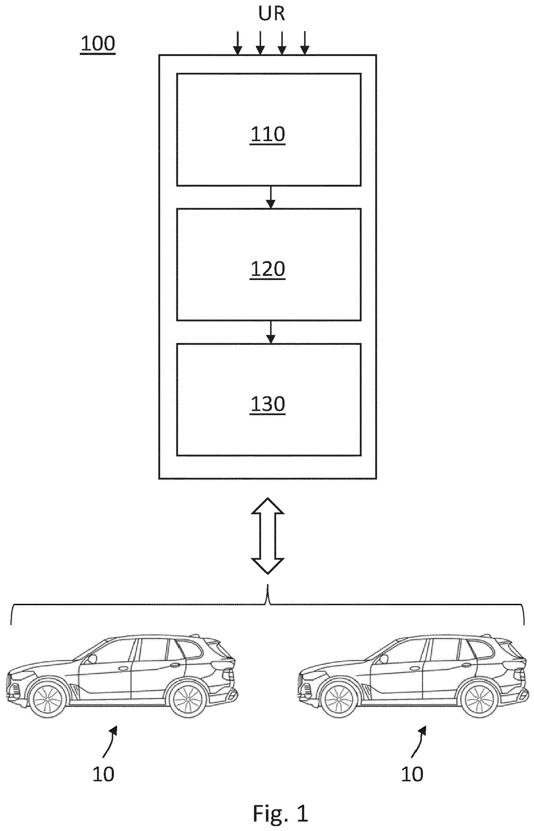

The above is achieved by a system 100 for operating a fleet of vehicles / plurality of vehicles as it is illustrated in FIG. 1.

The system 100 includes a receiving unit 110 configured to receive a plurality of user requests UR for transportation of users to respective destinations; a batching decisions controller unit 120 configured to batch the plurality of user requests UR based on at least one of an origin and a destination of each user to form at least one request batch; and an assignment unit 130 configured to apply an algorithm to the at least one request batch to assign each of the user requests of the at least one request batch to a respective vehicle of the fleet of vehicles / plurality of vehicles.

In some embodiments, the system 100 is configured to navigate and/or control the vehicles according to travel paths. For example, the system 100 can provide instructions autonomous vehicles 10 to transport users from their respective origin to their respective destination.

The following sections provide an extensive and detailed overview of the above general approach.

## 2. Introduction

This section presents the definitions, assumptions and the dynamic MOD service problems addressed in the present disclosure.

Studied Mobility on Demand Service

The present MOD service consists of RH scenarios where only one user request can be served at a time. Each user r dynamically requests a vehicle from point $r_p$ to $r_d$ at time $t_r$. The user must be picked up within the time windows $[t_r, t_r + l_{max}]$, where $l_{max}$ is the maximum allowed pickup delay of the user. The assignment of vehicles to users is controlled by a central controller.

Service Quality Measurement

Generally, the overall performance of any particular batching or assignment strategy depends on various individual objectives, like how many users are served, the empty distances covered by vehicles, fuel consumption, etc. Each MSP can have their own definition of what they see as a good metric for evaluating the performance.

Let $R^s$ and $R^{ns}$ represent the sets of served and unserved users, respectively. The profit is formulated in terms of the total distance travelled by vehicles and the number of users served. For a user r, a base fare of $\zeta$ and a variable fee of $f^D$ for each unit distance travelled between pickup and drop off are charged. For the vehicle maintenance cost a variable cost of $c^D$ per unit distance is added. The profit is penalized for the unserved users by a constant charge of $\xi$ per user. Thus, the profit function is given as:

$$\sum_{r \in R^s} \left( \zeta + f^D \cdot d_r^{pd} \right) - \sum_{v \in V} \left( c^D \cdot d_v \right) - \sum_{r \in R^{ns}} \xi$$

where $d_r^{pd}$ is the distance between pickup and dropoff point of request $r$, and $d_v$ is the total distance travelled by vehicle v.

Batch Optimization

Since the overall RH problem is dynamic, the users are usually combined together into batches before solving a vehicles assignment problem. This helps in finding a better optimal assignment of the dynamic users to vehicles, and in-turn, leads to better overall profit then an immediate assignment of the new users to a nearest vehicle.

First the vehicle availability is updated for the whole fleet. If some vehicles are serving users, then the dropoff times and locations of the users are used as the availability time and location for the vehicle. The overall profit function as described previously is used for the optimization of the batch as well. However, the following constraints are observed while maximizing the profit:

- Only one vehicle serves a single request.

- Vehicles are assigned to at most one pickup.

- For a served request i the pickup time is between $[t_r, t_r + l_{max}]$.

Any request that is not assigned inside the batch optimization is removed from the pool of requests, as most likely it will not be assigned to any vehicle in future as well.

## 3. Methodology

This section presents an exemplary implementation of the fundamental approaches used in the present disclosure. First the region-based batching technique is introduced, followed by a Reinforcement Learning (RL) based method that is used to develop a rule for benefiting from the regional batching technique.

Region-Based Batching Strategy

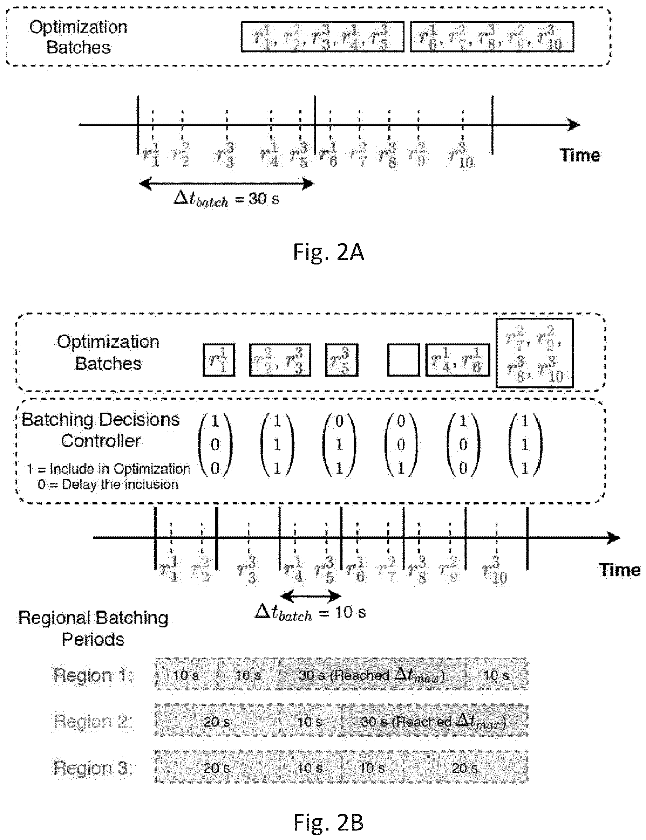

As described in the above section 2, the users are usually combined into batches before solving an assignment problem. Traditionally, these batches are formed by accumulating the new user for a fixed period of time known as the batching period $\Delta t_{batch}$, as shown in Figure 2A. This batching strategy is referred to as "constant-batching". There are two major drawbacks of this technique:

- The constant-batching technique does not take into account the origin and destination of vehicles and users for the formation of batches. This limits the optimization potential of the assignment problem due to the hard pre-defined temporal boundaries. For example, consider a scenario when there are imbalances of vehicle supply and potential user demand in different regions of the operation area. Usually once a batch is solved by the assignment problem, the decisions of which users are to be served remains fixed. The constant-batching will only consider the time of entry of the new user into the system for forming a batch. However, this strict time of entry based batching leaves the potential of making batches that would also lead to reduced regional imbalances by considering the user origins and destinations for batches.
- The constant-batching technique does not take into account the forecast information for forming batches. Assuming a commonly reported $\Delta t_{batch}$ of 30 seconds, the lack of incorporation of forecasts leads to longer response times irrespective of the expected number of future users and time of the day. For example, during late afternoon or midnight some of the areas within the city may not have a lot of available users. However, the constant-batching would still wait 30 seconds to make a batch for optimization; this leads to an unnecessary delayed response to the user.

The embodiments of the present disclosure can resolve the above issues by implementing a region-based strategy. The MOD operation area is often divided into regions for multiple maintenance reasons, like the aggregation of supply and demand for forecasts. As shown in Figure 2B, the batching strategy uses a Batching Decisions Controller (BDC) to form the batches. Regions in Figure 2B can be either the region of origin or destination of user requests, depending on the type of Batching Decisions Controller (BDC) used. Thus, the batching periods of a group of requests can vary depending on when they are included inside the optimization. A region cannot be skipped for more than $\Delta t_{max}$ seconds. In the present example, only a user destination based BDC is explained.

The BDC decision can filter the requests based on either the origin or the destination of user requests. If it is based on origin, then the users that originate in a certain region should be filtered based on the BDC decision. Similarly, if it is based on user destinations, then all the users going to a specific zone should be filtered based on the BDC decision. However, the user destination based BDC has the advantage of directly controlling the number of vehicles that will be available in different regions. This provides a better control on the future vehicle supply and demand situations in the regions.

With the BDC, the actual batching period $\Delta t_{batch}$ is kept low such that also the minimum MSP response time (compared to fixed response time in constant-batching) is reduced. This example also uses a reasonable maximum batching time $\Delta t_{max}$ that decides the maximum amount of time a region can be delayed. Therefore, as shown in Figure 2B the batching periods can vary for different group of requests depending on BDC decisions.

A challenging part is designing an effective BDC that improves the long-term performance or profit of the system. Any algorithm used for the BDC should have the knowledge of multiple aspects of the dynamic assignment problem, such as:

- How much short-term profit should be obtained by solving the assignment problem of the vehicles at current locations and batches with specific characteristics?

- What are the long-term performance impacts by using the current batch?

- How are different regions of the operation area connected to each other?

- What is the relation of users with specific origin and destination with the overall system, and how they can be grouped together to improve performance?

The following briefly goes through the difficulties involved for designing an effective BDC algorithm while looking at the above aspects. Having a pre-knowledge of batch assignment profit requires that the BDC either solves the actual assignment problem or a smaller proxy problem to estimate how much profit a batch can bring. However, it will be computationally unfeasible to do that for all possible values of BDC especially with a higher number of regions. Secondly, it will have to solve the batch assignment multiple times within shorter $\Delta t_{batch}$ that will render it impractical for an actual MSP. Even if one is able to calculate the profit of the batches, the question still remains statistically connecting the batch profit to the long-term performance gains, the impacts of holding one region's requests with the other regions and the current users origin-destination information. All this would require an exponential number of parameters that are difficult to be fine-tuned manually. On the other hand, any strategy that fall short of making relations between all these details might lead to worse overall performance.

The above relations are difficult to be made using traditional algorithms. Therefore, the embodiment of the present disclosure uses an RL agent to learn the above relations via simulation experiments. In the following sections, the overall RL approach and the network used for this purpose are described.

Machine Learning and Batching Decisions Controller

Modern ML techniques have shown tremendous performance in learning the nonlinear relations among multitudes of variables. It is possible to train a neural network based BDC using a supervised learning approach. However, this would first require producing large simulation data with an optimal or good sub-optimal regional batching decision. However, calculating such solutions would be very complicated as the solution space for the BDC solutions increases tremendously with the overall simulation period and the number of regions used.

Let $n_z$ be the total number of regions and the total duration of simulated MOD scenario, respectively. Then after each $\Delta t_{batch}$ the number of possible BDC solutions would be $2^{n_z}$. Then for the total simulated period $T_{sim}$ of the MOD scenario the number of possible MOD scenario is given as $2^{(n_z \, T_{sim} / \Delta t_{batch})}$, where $T_{sim}$ and $\Delta t_{batch}$ are given in the same unit of time. Thus, it is computationally unfeasible to explore the whole solution space.

Therefore, the BDC problem suits well to the unsupervised reinforcement learning (RL) technique of ML. The RL works on the principle of learning the proper actions through interactions with the environment to achieve certain goals. It does not require pre-computed examples of the correct behaviour. The agent (learner) tries different actions and selects the one that produces the highest reward.

The BDC is a sequential decision-making problem, and the actions which the RL agent takes influence the reward. Therefore, it can be modelled as an unknown-parameters Markov Decision Process (MDP) with a value function representing how much reward accumulated through some particular sequence. In the present case, the agent tries to get the most expected amount of profit or reward from every state it encounters. The agent has to observe the state partially, take the proper batching action, and record the reward from the controller. With the RL approach the BDC will be neither limited by manually generated sub-optimal solutions nor there will be need to generate new data sets for individual MOD scenarios. Rather the same RL architecture can be put inside the simulated MOD scenario to learn the proper actions.

Reinforcement Learning Architecture

Some embodiments of the present disclosure use a dueling DQN architecture for training the RL agent. However, since the large number of regions in an operating area would drastically increase the action space for BDC, the dueling DQN cannot be used directly. Therefore, one can use a modified version of the dueling DQN with action-branching that scales well for large action spaces.

Dueling Deep Q Networks

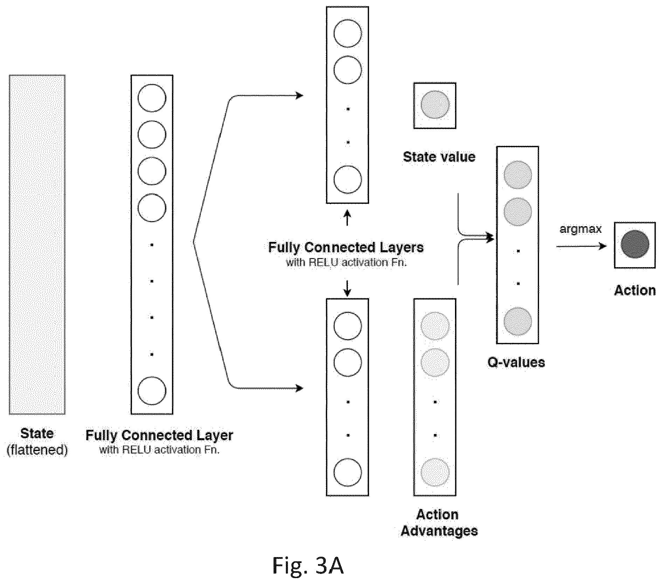

The dueling DQN architecture is a RL architecture which is motivated from the fact that the choice of a proper action is not as important for some states as for the others. Thus, in contrast to the architecture from DQN, the dueling architecture consists of two streams which represent the value and advantage functions, while sharing the same network representation as stream inputs. The aggregation layer at the end combines the advantages with the state value in order to estimate the Q-values for each action. The architecture is shown in Figure 3A.

The present disclosure suggests merging the two streams at the end using one of the following equations:

$$Q(s, a; \theta, \alpha, \beta) = V(s; \theta, \beta) + \left( A(s, a; \theta, \alpha) - max_{a' \in |A|} A\left(s, a'; \theta, \alpha\right) \right)$$

$$Q(s, a; \theta, \alpha, \beta) = V(s; \theta, \beta) + \left( A(s, a; \theta, \alpha) - \frac{1}{|A|} \sum_{a'} A\left(s, a'; \theta, \alpha\right) \right)$$

Branching Dueling Q-Network (BDQ)

Neural networks as function approximators in RL algorithms are able to deal with high-dimensional input data as they can model complex hierarchical or compositional data abstractions and features. However, the DQN architecture variants increase the output size exponentially when using high-dimensional action space. Formally, for an environment with N-dimensional action space, and $n_d$ discrete sub-actions for each dimension $d$, using Double DQN algorithm or other discrete action RL algorithms, the possible actions for the agent at each discrete time step are $\prod_{d=1}^{N} n_d$. This makes it difficult to be applied to examples with higher action spaces.

Conventional domain benchmark examples, on which the Dueling DQN variant has been tested, usually have low-dimensional action spaces. However, the action space for a BDC increases exponentially with the increase of regions in the operational area. For example, for the 63 zones of Manhattan operational area in NYC the action space with BDC action set of {0,1} for each zone, the possible Q-values are $2^{63}$. This high number of action space is unfeasible for the Dueling DQN architecture.

One plausible approach to solve the above problem is to train individual agents with an independent network for each action dimension. Another approach is to train multiple independent fully-cooperative learning RL agents to agree on the overall action at each time step. However, the above two approaches are computationally expensive.

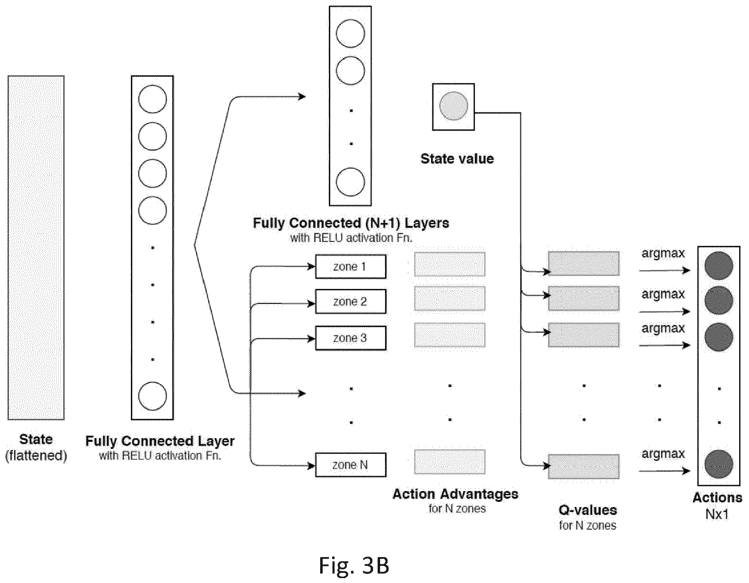

A better approach to solve this problem is a Branching Dueling Q-Network BDQ architecture. The architecture introduces a single neural network with multiple streams as a Q-function approximation. The first stream is used for approximating the state value, while the other N streams are used for approximating the action advantages for each dimension. The state value stream is used at each dimension to approximate its Q-values using the same method as the Dueling DQN architecture. The sub-actions with the highest Q-values are selected at each dimension. All sub-actions are concatenated at a special layer at the end to formulate the action of the agent. Figure 3B shows the architecture adopted for BDC. This architecture makes it feasible to use 63 zones of Manhattan, as the possible Q-values would be $2^{63}$ when there are two possible actions at each zone instead of $2^{63}$ when using other DQN architectures.

RL Agent's Environment for Batching Decisions Controller

The way the agent observes the state of the environment controls its efficiency in learning. The inclusion or exclusion decision of a BDC could be taken on the level of individual user's level. However, this would dramatically increase the state space with large instances of data. Besides, the incoming requests do not have fixed or known distributions, which could produce variable size input. Therefore, the aggregation of user requests into regions solves both issues by fixing and reducing the input state size.

Furthermore, as described earlier, any effective strategy for BDC must have some intuition of the long-term regional situation to develop a relation between the current and the future regional situations. The present disclosure provides this intuition of the future regional situation by a separate predictor that provides the possible number of future users for each region within the next $T_{pred}$ period. However, to avoid observation errors caused by the prediction method, simulation data can be used to calculate the number of users in each region within the next $T_{pred}$ period from the current time.

Thus, if Z represents the set of all regions inside the operation area, then at each time step (after every $\Delta t_{batch}$) the agent observes the state of the environment using following features:

• Number of stationary cars in each zone $z \in Z$.

- Number of serving cars' dropoff locations that arrives in the next $T_{pred}$ minutes in each zone $z \in Z$.

- Number of user origins in the next $T_{pred}$ period for each zone $z \in Z$.

- Flow matrix of future users in the next $T_{pred}$ period where the row number represents the origin zones, the column number represents the destination zones, and the cell value represents how many requests go from zone $z_p$ to $z_d$.

Using the above raw counts as environment features raises a fundamental issue of considering each region separately, without considering the proximity of the neighboring regions. Contrarily, in an actual MOD use case, no region ever operates separate from other regions. Any vehicle in one region is able to serve users in neighboring regions, and thus, will have an impact on the other regions as well. Therefore, a variant of the above features can be studied using Kernel Density Estimation (KDE) where one takes into account the proximity of other regions. In the following section this modification to the features is described.

KDE based Zone Features

Adopting KDE based formulation eliminates the fundamental limitation of the region based features that treat each zone separately without considering the proximity of other zones. KDE is a non-parametric probability density function (pdf) estimator. It tries to automatically adopt itself to the shape of the underlying density function.

Firstly, instead of dealing with the individual counts in the previous section, one can represent them in terms of imbalances between vehicle supply and expectation in regions. For each region $z \in Z$, an imbalance weight $w_z \in W$ can be defined as:

$$ w_z = |V_z^+| + |V_z^{enroute}| + |R_z^+| - |R_z^-| $$

where $V_z^+$ and $V_z^{enroute}$ represent the set of idle vehicles in zone z and the enroute vehicles that will become idle in zone z within $T_{pred}$, respectively. $R_z^+$ and $R_z^-$ are sets representing the forecast of user destination and origin locations for $T_{pred}$ in zone z, respectively. The positive zone weights represent surplus zones while the negative weights represent deficiency.

Then a linear 2D kernel function is applied at the centre of each zone, given as:

$$ k(x, x_z; h) = \begin{cases} 1 - \frac{\|x - x_z\|^2}{h}, & \text{if } \|x\|^2 \leq h \\ 0 & \text{otherwise} \end{cases} $$

where $x_z$ represent the center of zone z and h is a bandwidth of the kernel that defines the spread of the 2D kernel. The parameter h can also be interpreted as the reachability of a vehicle located at the center of the zone. It is selected according to the average speed of the transportation network.

After applying the kernel to the center, the weighted KDE is given as:

$$ p(x) = \frac{3}{\pi\, h^2 \sum_{i=1}^{|Z|} w_i} \sum_{i=1}^{|Z|} w_i k(x, x_i; h) $$

where division by the volume factor $(\pi h^2 \sum_{i=1}^{|Z|} w_i)/3$ is used in the KDE to make $\int p(x)dx$ as it is a probability distribution. However, for this purpose keeping the original scales of the imbalance is important. Thus, after removing the above volume scaling factor, the KDE based function is given as:

$$\bar{p}(x) = \sum_{i=1}^{|Z|} w_i k(x, x_i; h)$$

which is a weighted sum of the kernel functions centered at the zone centers. For the purpose of environment features, one first calculates the afore equation and then uses it at the zone centers as the environment feature. Thus, it naturally takes into account the impacts of the neighboring zones into the feature vector.

## 4. Ride Hailing Simulation Environment

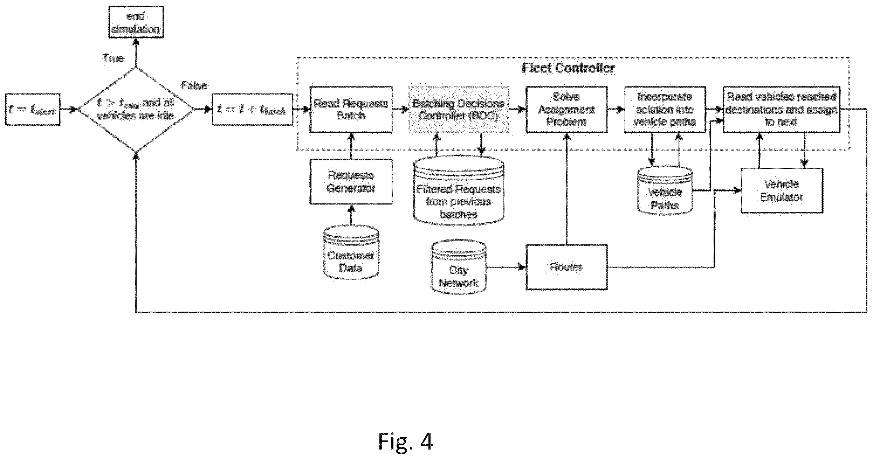

An exemplary simulation environment for testing the approach on real data is shown in Figure 4 and may include the following major components:

- Router: The router has the knowledge of the city network. It provides the travel duration and distance matrices for going from one point to another. Additionally, it also provides the shape of the fastest route.
- Vehicle Emulator: It emulates the MOD fleet on the city network. The vehicles positions are updated every $\Delta t_{batch}$ seconds. Thus, any idle vehicle can only start moving at some multiple of $\Delta t_{batch}$. However, if a vehicle is expected to reach a destination in between these discrete time-steps, then it is marked as reached at that specific time.
- Requests Generator: It reads the past data and incrementally generates the batches of user requests using $\Delta t_{batch}$ till the simulation time reaches $t_{end}$.
- Fleet Controller: It assigns the vehicles to their next locations. The assignment problem is also solved by the fleet controller. It can be thought as the MSP for the RH scenario. The BDC is also an integral part of the fleet controller.

While the foregoing is directed to embodiments of the disclosure, other and further embodiments of the disclosure may be devised without departing from the basic scope thereof, and the scope thereof is determined by the claims that follow.

## Claims

1. A system (100) for operating a fleet of vehicles (10), comprising:

   a receiving unit (110) configured to receive a plurality of user requests (UR) for transportation of users to respective destinations;
   a batching decisions controller unit (120) configured to batch the plurality of user requests (UR) based on at least one of an origin and a destination of each user to form at least one request batch; and
   an assignment unit (130) configured to apply an algorithm to the at least one request batch to assign each of the user requests of the at least one request batch to a respective vehicle of the fleet of vehicles (10).

2. The system (100) of claim 1, wherein the batching decisions controller unit (120) is configured to include a user request in the at least one request batch and to delay an inclusion of a user request in the at least one request batch based on at least one of the origin and the destination of the corresponding user.

3. The system (100) of claim 1 or 2, wherein each request batch corresponds to a respective batching period, and wherein the batching decisions controller unit (120) is configured to vary a duration of the batching period.

4. The system of claim 3, wherein the batching decisions controller unit (120) is configured to extend a basic duration of the batching period by delaying an inclusion of a user request in the at least one request batch.

5. The system (100) of claim 4, wherein the batching decisions controller unit (120) is configured to extend the batching period up to a maximum duration, in particular wherein the basic duration is 10 seconds and/or the maximum duration is 30 seconds.

6. The system (100) of any one of claims 1 to 5, wherein the batching decisions controller unit (120) includes a Reinforcement Learning-trained neural network configured for batching the plurality of user requests (UR).

7. The system (100) of any one of claims 1 to 6, wherein the system (100) is further configured to determine, for each of the assigned vehicles, a respective travel path.

8. The system (100) of claim 7, wherein the system (100) is further configured to navigate and/or control the vehicles according to the determined travel paths.

9. A method for operating a fleet of vehicles, comprising:

receiving a plurality of user requests for transportation of users to respective destinations;
batching, by a batching decisions controller unit, the plurality of user requests based on at least one of an origin and a destination of each user to form at least one request batch; and
applying an algorithm to the at least one request batch to assign each of the user requests of the at least one request batch to a respective vehicle of the fleet of vehicles.

10. A machine readable medium comprising instructions executable by one or more processors to implement the method for operating a fleet of vehicles according to the preceding claim.

Fig. 1

Fig. 2A

Fig. 2B

Fig. 3A

Fig. 3B

Fig. 4

Europäisches
Patentamt

European
Patent Office

Office européen
des brevets

# EUROPEAN SEARCH REPORT

**Application Number**

EP 20 20 1703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/033310 A1 (KENTLEY-KLAY TIMOTHY DAVID [US] ET AL) 1 February 2018 (2018-02-01) * figures 1,7 * | 1-10 | INV. G06Q10/04 G06Q10/06 G06N3/08 G08G1/00 G01C21/34 |
| X | US 2020/074353 A1 (QIN ZHIWEI [US] ET AL) 5 March 2020 (2020-03-05) * paragraph [0038]; figure 1 * | 1-10 | |
| X | US 2019/196503 A1 (ABARI FARZAD CYRUS FOROUGHI [US] ET AL) 27 June 2019 (2019-06-27) * figures 1,4 * | 1-10 | |
| X | US 2020/193226 A1 (ALBAGHAJATI ANAS MOHAMMED [SA] ET AL) 18 June 2020 (2020-06-18) * paragraphs [0010] - [0012]; figures 5,29 * | 1-10 | |
| A | ARASH TAVAKOLI ET AL: "Action Branching Architectures for Deep Reinforcement Learning", ARXIV.ORG, CORNELL UNIVERSITY LIBRARY, 201 OLIN LIBRARY CORNELL UNIVERSITY ITHACA, NY 14853, 24 November 2017 (2017-11-24), XP081299404, * page 1 * | 1-10 | TECHNICAL FIELDS SEARCHED (IPC) G06Q G06N G08G G01C |

The present search report has been drawn up for all claims

| Place of search | Date of completion of the search | Examiner |
|---|---|---|
| Munich | 26 February 2021 | Flores Sanchez, L |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 20 20 1703

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2021

| Patent document cited in search report | | | Publication date | Patent family member(s) | | Publication date |
|---|---|---|---|---|---|---|
| US 2018033310 | A1 | | 01-02-2018 | US 2017132934 A1<br>US 2018033310 A1 | | 11-05-2017<br>01-02-2018 |
| US 2020074353 | A1 | | 05-03-2020 | US 2020074353 A1<br>US 2020074354 A1<br>WO 2020050872 A1<br>WO 2020050873 A1 | | 05-03-2020<br>05-03-2020<br>12-03-2020<br>12-03-2020 |
| US 2019196503 | A1 | | 27-06-2019 | NONE | | |
| US 2020193226 | A1 | | 18-06-2020 | NONE | | |

EPO FORM P0459

For more details about this annex : see Official Journal of the European Patent Office, No. 12/82